# EUROPEAN PATENT APPLICATION

(11) **EP 1 916 167 A2**
(43) Date of publication of application: **30.04.2008**
(21) Application number: 07020914.3
(22) Date of filing: 25.10.2007
(51) Int. Cl.: B60T 8/40, B60T 8/88, B60T 8/94

(54) **Brake control device**

(30) Priority: 27.10.2006 JP 2006291917
(71) Applicant: Hitachi, Ltd., Chiyoda-ku Tokyo 100-8280 (JP)
(72) Inventor: Nishino, Kimio, Tokyo 100-8220 (JP); Innami, Toshiyuki, Tokyo 100-8220 (JP); Ohsawa, Toshiya, Tokyo 100-8220 (JP); Kobayashi, Hitoshi, Tokyo 100-8220 (JP); Iwasaki, Katsuya, Tokyo 100-8220 (JP)
(74) Representative: Beetz & Partner

(57) **Abstract**

In a brake control device using a plurality of low-noise and low-vibration pumps, if one pump fails, when the other pump compensates the function of the failed pump to reduce the influence of the failure, there is fear that a driver is not aware of the failure in the brake control device or neglects and leaves the failure unrepaired even if the driver becomes aware of the failure. The invention effectively causes the driver to be aware of the occurrence of a failure in the brake device while continuously ensuring brake force. If a failure is detected, hydraulic pressure actuators (23a,23b,24a,24b) are controlled so that the pulse of hydraulic pressure in wheel cylinders (18a,18b,18c,18d) becomes larger than that before the failure is detected. Alternatively, two pumps (P1,P2) different in pulse characteristic of discharge hydraulic pressure from each other are connected in parallel to the wheel cylinders (18a,18b,18c,18d).

## Description

### BACKGROUND OF THE INVENTION

The present invention relates to an electro hydraulic brake for a vehicle and to the control of the same.

An electro hydraulic brake as a vehicle brake system has been developed in which a driver's depression on a brake pedal is electrically detected, a target brake force is calculated based on the detected depression and a brake hydraulic pressure is varied using an electric pump or valve to realize the target brake force, thereby controlling brake force. This is a brake system which is independent of a negative pressure of an engine, electrically performs vehicle attitude control and automatic brake control, thereby enabling a detailed brake force control.

It is important for such an electro hydraulic brake system to inhibit lowering of brake force caused by failure. There has been known a brake control system which is equipped with, for example, a high and a low pressure pump, an din which, if one of the pumps fails, the other pump compensates the function of the failed pump to reduce the influence of the breakdown (see, for example, JP-A-2000-283055).

### BRIEF SUMMARY OF THE INVENTION

It is general that as a pump adopted in a brake system, a low-noise and low-vibration pump is used so as not to make a driver uncomfortable during driving or a pump is driven in a manner of reducing noise and vibration. In a brake control device using a plurality of such low-noise and low-vibration pumps, if one pump fails and the other pump compensates the function of the failed pump to reduce the influence of the failure, as is in the above conventional art, there is fear that, even when an alarm lamp is lit, a driver will neglect the failed state of the brake and leave the failure as it is without repair. As a result, the driver does not carefully drive without respect to a probability that brake force will be significantly reduced if a next failure happens. In addition, the driver may leave the failure as it is without repair.

The present invention has therefore an object of effectively informing a driver of the occurrence of abnormality in a brake system to cause the driver not to leave the abnormality while continuously securing brake force.

The present invention, if a failure is detected, controls a hydraulic actuator such that hydraulic pressure pulsation in wheel cylinders become larger than that before the failure is detected. Alternatively, two pumps different in the pulse characteristic of discharge hydraulic pressure from each other are connected in parallel to the wheel cylinders.

According to the invention, safety can be further improved in the case where abnormality occurs in a break system.

Other objects, features and advantages of the invention will become apparent from the following description of embodiments of the invention taken in conjunction with the accompanying drawings.

### BRIEF DESCRIPTION OF THE SEVERAL VIEWS OF THE DRAWING

Fig. 1 shows a system configuration view of a brake control device;
Fig. 2 shows a control block diagram of the brake control device;
Fig. 3 shows a hydraulic circuit diagram of the brake control device of the first embodiment;
Fig. 4 shows an example of a method of switching control modes in the failure determining unit in Fig. 3;
Fig. 5 shows an example of discharge hydraulic pressure of a gear pump and a plunger pump;
Fig. 6 shows a method of switching control modes in the failure determining unit in the second embodiment;
Fig. 7 shows an example of a method of switching control modes in the failure determining unit in the third embodiment;
Fig. 8 shows a hydraulic circuit diagram of the brake control device in the fourth embodiment.
Fig. 9 shows an example of a method of switching control modes in the failure determining unit in Fig. 8;
Fig. 10 shows an example of hydraulic pressure pulse in Fig. 8;
Fig. 11 shows an example of a method of switching control modes in the failure determining unit in the fifth embodiment;
Fig. 12 shows an example of a method of switching control modes in the failure determining unit in the sixth embodiment;
Fig. 13 shows an example of the gear pump; and
Fig. 14 shows an example of the plunger pump.

### DETAILED DESCRIPTION OF THE INVENTION

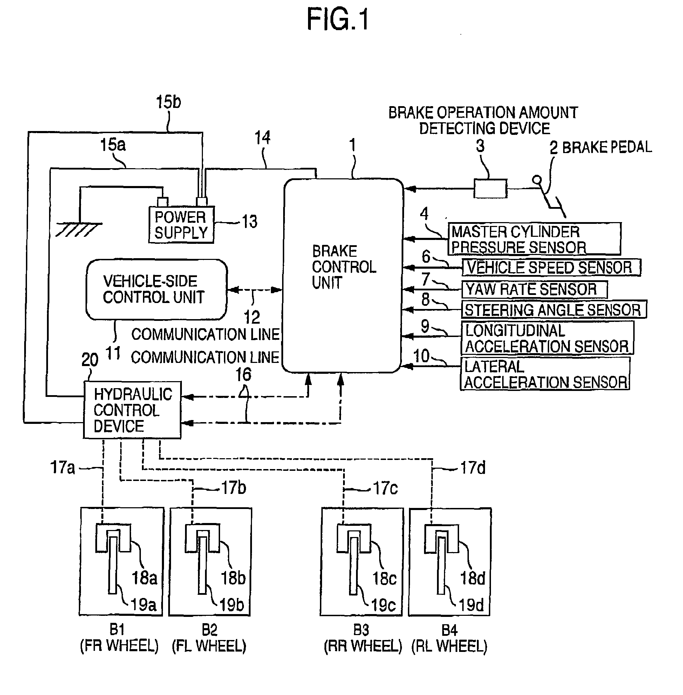

Fig. 1 shows the view of the system configuration of the brake control device forming an embodiment of the present invention.

Information is input into a brake control unit 1 from various sensors such as a brake operation amount detecting device 3 for detecting an amount of depression of a brake pedal 2 by a driver, master cylinder pressure sensor 4, vehicle speed sensor 6 for detecting the speed of each wheel of an automobile (speed of total four wheels; front left and right, and rear left and right wheels), yaw rate sensor 7 for detecting the yaw rate of the automobile, steering angle sensor 8 for detecting a steering angle, longitudinal acceleration sensor 9 for detecting acceleration in the front and the rear direction of the automobile, lateral acceleration sensor 10 for detecting acceleration in the lateral direction of the automobile. In this embodiment, the brake pedal 2 is a means by which the driver inputs break operation for the automobile. A joystick may be used instead of the brake pedal. A force sensor for detecting a force operating the brake pedal and/or a stroke sensor for detecting the travel of the brake pedal may be used as the brake operation amount detecting device 3. A master cylinder pressure sensor may be also used. The brake control unit 1 is connected to a communication line 12 and can transmit and receive information to and from other control units mounted on a vehicle if required. The communication line 12 can be realized by CAN or the like.

The brake control unit is also connected to a hydraulic control device 20 through a communication line 16 to transmit and receive information on target hydraulic pressure or target brake force produced at wheels FR, FL, RR and RL, actual hydraulic pressure or produced brake force, hydraulic control state, failed state, and the like. Accordingly, if the communication line 16 is broken, it becomes difficult to continue a by-wire control, so that it is general to make it redundant like the present embodiment. The communication line 16 can also be realized by CAN or the like.

The hydraulic control device 20 serves to control hydraulic pressure supplied to each of pipes 17a to 17d laid to brake calipers 18a to 18d of the wheels and is comprised of pumps, solenoid valves, hydraulic sensors and the like. The hydraulic control device 20 operates the pumps and solenoid valves to separately control the hydraulic pressure of each wheel so that the hydraulic pressure reaches a target hydraulic pressure or target brake force of each wheel. Incidentally, as a method of controlling the hydraulic pressure of each wheel, there is generally known a method in which the hydraulic pressure of the pipes 17a to 17d toward each wheel is detected by the hydraulic pressure sensor and a hydraulic pressure feedback control is performed based on the detected hydraulic pressure. An electric power line 15 supplying electric power to the hydraulic control device 20 is connected thereto.

Brake force generating devices B1 to B4 of the respective wheels comprise braked members 19a to 19d installed on the wheels FR, FL, RR and RL of the automobile and integrally rotating with the wheels, braking members (not shown) and the brake calipers 18a to 18d for pressing the braking members against the braked members 19. Brake disks or brake drums are taken as an example of the braked members 19a to 19d, and brake pads or brake shoes are taken as the braking members. Force pressing the braking members against the braked members 19a to 19d is generated by transmitting hydraulic pressure generated by the hydraulic control device 20 to the wheel cylinders of the brake calipers 18a to 18d through the pipes 17a to 17d. The brake force generating devices B1 to B4 generate brake force in the respective wheels FR, FL, RR and RL by force (wheel cylinder pressure) by which the wheel cylinders of the brake calipers 18a to 18d press the braked members 19a to 19d.

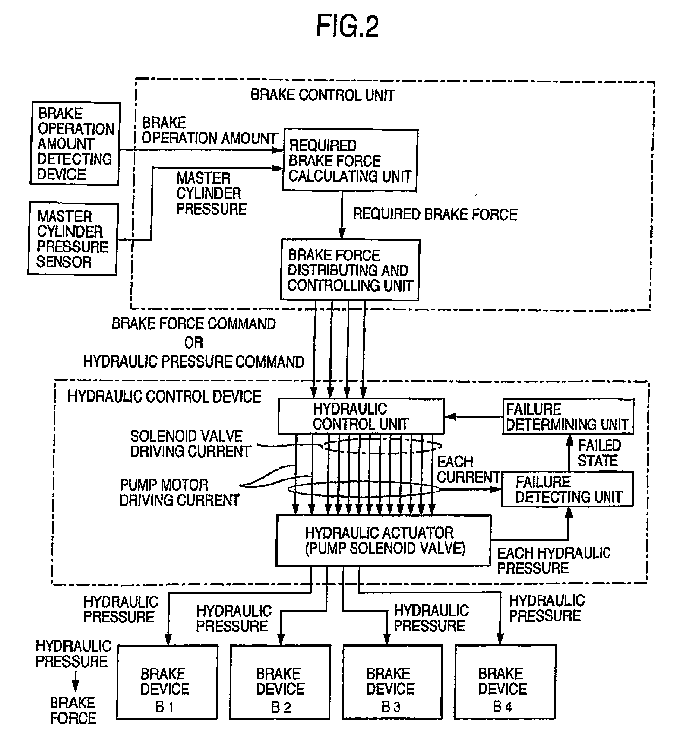

Fig. 2 is the control block diagram of the brake control device forming the embodiment of the invention.

A required brake force calculating unit calculates the brake force required by a driver based on a brake operation amount detected by the brake operation amount detecting device 3 or on a master cylinder pressure.

A brake force distributing and controlling unit calculates the target brake force or target hydraulic pressure to be generated in the wheels from the required brake force. The target brake force or target hydraulic pressure to be generated in the wheels may be calculated from at least one of the required brake force, vehicle behavior based on information from the various sensors such as the vehicle speed sensor 6 for detecting the speed of each wheel of the automobile (speed of total four wheels; front left and right, and rear left and right wheels) illustrated in Fig. 1, yaw rate sensor 7 for detecting the yaw rate of the automobile, steering angle sensor 8 for detecting a steering angle, longitudinal acceleration sensor 9 for detecting acceleration in the front and the rear direction of the automobile, lateral acceleration sensor 10 for detecting acceleration in the lateral direction of the automobile and requirements for brake force transmitted through the communication line 12 from other control units mounted on the vehicle.

A failure detecting unit in the hydraulic control device refers to the driving current of each pump and solenoid valve, the hydraulic pressure of each wheel cylinder and so forth. The unit judges a failure to occur when such a case that the reference value is outside a predetermined range or a difference from the target value exceeds a predetermined value continues for a predetermined time period or longer. For example, if pump driving current is of a value outside a predetermined range, when a situation that a difference from the target value exceeds a predetermined value continues for a predetermined time period or longer, a failure that a pump motor cannot be normally driven is detected.

The failure detecting unit may be configured to receive information from voltage and current detecting units for directly detecting various failures. For example, reference is made to a value from each voltage detecting unit to detect a failure in the hydraulic control device or in the periphery of the hydraulic control device such as harness and the like, which is caused by short circuit, ground short and breaking of wire of the communication line 16 illustrated in Fig. 1, breaking of wire of the power supply lines 15a and 15b, voltage outside the predetermined range, drop in voltage across a power supply 13, and abnormality in voltage at each portion is detected if the situation that the reference value is outside the predetermined range continues for a predetermined time period or longer. Although the failure detecting unit diagnoses a CPU by a monitor IC to detect abnormality in the CPU itself, the failure detecting unit may include other processes than that for the CPU. The failure detecting unit also performs diagnosis of abnormality in the monitor IC, diagnosis of communication data of the communication line 16 and the like.

A failure determining unit in the hydraulic control device switches the control modes of the by-wire control on the basis of the failed state detected by the failure detecting unit and determines whether to proceed to a mechanical backup brake which directly generates a brake force by the brake force generating devices B1 and B2 or B1 to B4.

A hydraulic control unit in the hydraulic control device controls hydraulic pressure to be generated in each wheel based on the target brake force or target hydraulic pressure. In addition, the hydraulic control unit controls hydraulic pressure in the control mode based on the determination result of the failure determining unit.

The present invention, when a failure is detected in the system configuration described above, for example, controls a hydraulic actuator such that hydraulic pressure pulse in the wheel cylinders becomes larger than that before the failure is detected. Alternatively, two pumps which are different in the pulse characteristic of discharge hydraulic pressure from each other are connected in parallel to the wheel cylinders. Some practical examples of this arrangement are described below.

### [Example 1]

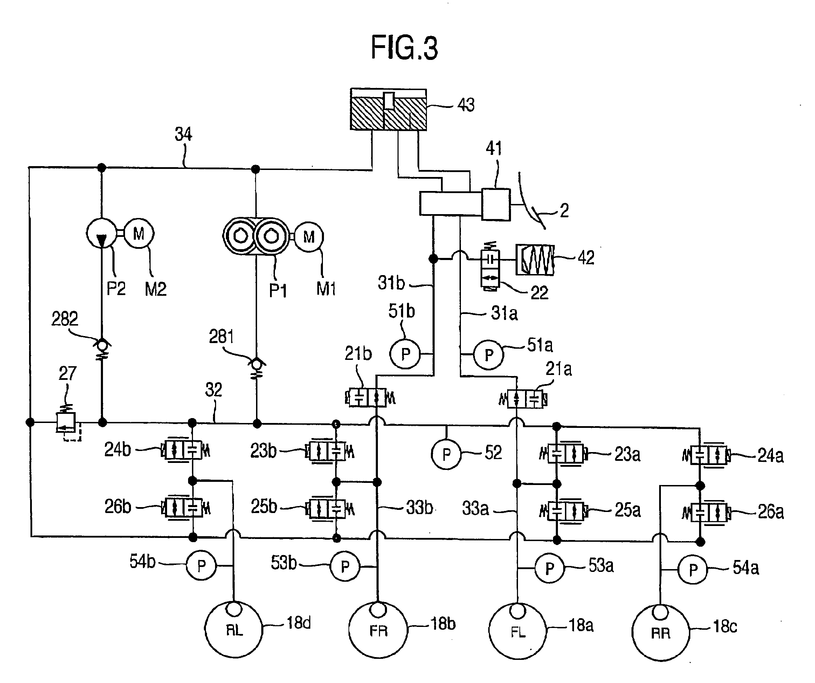

Fig. 3 shows the hydraulic circuit diagram of the brake control device forming example 1.

A master cylinder 41 is of a so-called tandem type, and can separately supply the same hydraulic pressure to a P system through an oil path 31a and an S system through an oil path 31b respectively. A reservoir 43 for storing brake liquid is connected to the master cylinder 41.

The wheel cylinders 18a and 18b of the wheels FL and FR are connected to the P and the S system of the oil paths 31a and 31b respectively. Shutoff valves 21a and 21b are provided between the oil path 31a and the wheel cylinder 18a of the wheel FL and between the oil path 31b and the wheel cylinder 18b of the wheel FR respectively. The shutoff valves 21a and 21b are normally opened solenoid valves and perform communication/shutoff between the master cylinder 41 and the wheel cylinders of the wheels FL and FR. With this circuit configuration, in the by-wire control, a master cylinder 41 side and a side of the wheel cylinders 18a and 18b of the wheels FL and FR can be separated by energizing the shutoff valves 21a and 21b. Even if a failure occurs by which the by-wire control is unable, the shutoff valves 21a and 21b are de-energized to enable supplying the hydraulic pressure of the master cylinder to the wheel cylinders 18a and 18b of the wheels FL and FR.

A stroke simulator 42 is connected to the oil path 31b between the master cylinder 41 and the shutoff valve 21b. The stroke simulator 42 secures the stroke of the brake pedal 2 during the by-wire control and produces a brake pedal feeling of the driver. A switching valve 22 is provided in the oil path 31b between the master cylinder 41 and the shutoff valve 21b. The switching valve 22 is a normally closed solenoid valve. De-energizing the solenoid valve in transition to the mechanical backup brake prevents the hydraulic pressure of the oil path 31b from being supplied to the stroke simulator 42.

The discharge sides of pumps P1 and P2 are connected to the wheel cylinders 18a, 18b, 18c and 18d of the wheels FL, FR, RR and RL through an oil path 32 respectively. Invalves 23a, 23b, 24a and 24b are provided between the oil path 32 and the wheel cylinders 18a, 18b, 18c and 18d of the wheels FL, FR, RR and RL respectively.

The invalves 23a, 23b, 24a and 24b function as booster valves for the wheel cylinders. These are normally closed proportional valve to proportionally control the discharge hydraulic pressure of the pumps P1 and P2 to separately control the hydraulic pressure of the wheel cylinders 18a, 18b, 18c and 18d of the wheels FL, FR, RR and RL. The normally closed invalves prevent the discharge hydraulic pressure of the pumps P1 and P2 from flowing out to the wheel cylinders 18a, 18b, 18c, and 18d at the time of a failure.

The inlet sides of the pumps P1 and P2 are connected to the reservoir 43 through an oil path 34. Outvalves 25a, 25b, 26a and 26b are provided between the oil path 34 and the wheel cylinders 18a, 18b, 18c and 18d of the wheels FL, FR, RR and RL respectively. The outvalves function as reducing valves for the wheel cylinders.

The outvalves 25a and 25b are normally closed proportional valves, but the outvalves 26a and 26b are normally opened proportional valves.

A relief valve 27 is provided between the oil paths 32 and 34 and opened when the discharge hydraulic pressure of the pumps P1 and P2 exceeds a predetermined value to return the hydraulic pressure of the oil path 32 to the reservoir 43.

Wheel cylinder pressure sensors 53a, 53b, 54a and 54b are provided so that they monitor the hydraulic pressure of the P system supplied through an oil path 31a and of the S system supplied through an oil path 31b by the master cylinder 41, master cylinder pressure sensors 51a and 51b monitor the discharge hydraulic pressure of the pumps P1 and P2 respectively and the hydraulic pressure of the oil path 32 and a pump discharge hydraulic pressure sensor 52 monitors the hydraulic pressure of the wheel cylinders 18a, 18b, 18c and 18d of the wheels FL, FR, RR and RL.

A brake-by-wire control will be described below. The shutoff valves 21a and 21b are closed during the brake-by-wire control to shut off the oil paths 31a, 31b and the oil paths 33a, 33b connected between the master cylinder 41 and the wheel cylinders 18a and 18b of the wheels FL and FR. Further, the switching valve 22 is opened to connect the oil path 31b extending from the master cylinder 41 to the stroke simulator 42, thereby enabling the stroke simulator to absorb brake fluid discharged from the master cylinder 41.

When pressure is increased in the brake-by-wire control, the invalves 23a, 23b, 24a and 24b are opened, the outvalves 25a, 25b, 26a and 26b are closed and then a first motor M1 is driven. The first motor M1 drives the first pump P1 to introduce pressurized brake fluid to the wheel cylinders 18a, 18b, 18c and 18d of the wheels FL, FR, RR and RL through the oil path 32 and the invalves 23a, 23b, 24a and 24b to increase the pressure. The invalves 23a, 23b, 24a and 24b are used to separately control the increase of the wheel cylinder pressure of the wheels. This is a so-called pump-up method in which the pump driving is directly controlled by controlling the pressure increase of the wheel cylinders 18a, 18b, 18c and 18d.

When pressure is reduced, the invalves 23a, 23b, 24a and 24b are closed and the outvalves 25a, 25b, 26a and 26b are opened to exhaust hydraulic oil in the wheel cylinders 18a, 18b, 18c and 18d of the wheels FL, FR, RR and RL into the reservoir 43 to reduce the pressure.

When pressure is held, all of the invalves 23a, 23b, 24a and 24b and the outvalves 25a, 25b, 26a and 26b are closed to hold the wheel cylinder pressure.

The brake-by-wire control at the time of normal operation has been described above. Description will be now made on a control method when the failure detecting unit in Fig. 2 detects a failure.

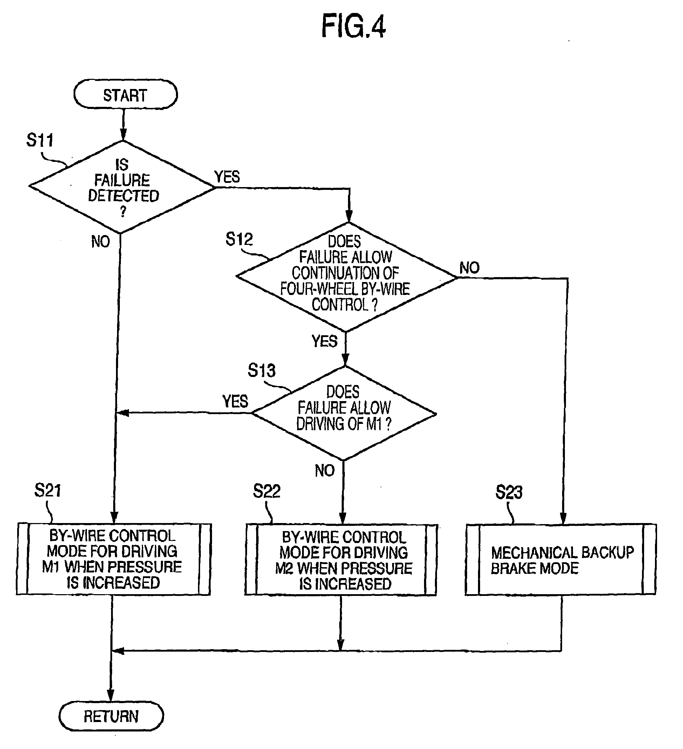

Fig. 4 shows an example of how to switch control modes in the failure determining unit of the embodiment in Fig. 3.

At step S11, judgment is made as to whether a failure is detected by the failure detecting means. If a failure is not detected, it is deemed to be normal, and the process enters a by-wire control mode at step S21 in which the pump motor M1 is driven when pressure is increased. If a failure is detected, the process proceeds to step S12.

At step S12, judgment is made, based on the failed state detected by the failure detecting means, whether a four-wheel by-wire control can be continued. If it is determined that the four-wheel by-wire control cannot be continued, the process proceeds to the mechanical backup brake mode at step S23. Fig. 4 illustrates only the example of the method of switching the control modes and parts unrelated to the present invention are omitted. Even if it is determined that the four-wheel by-wire control cannot be continued, the process may proceed to three-wheel by-wire control mode, diagonal two-wheel by-wire control mode, front or rear two-wheel by-wire control mode or left and right wheel same-pressure control mode according to the failed state instead of immediately proceeding to the mechanical backup brake mode. If it is determined that the four-wheel by-wire control can be continued, the process proceeds to step S13. A failed state in which the four-wheel by-wire control can be continued includes breakdown in a voltage detecting unit or current detecting unit and monitor IC which are used only for detecting a failure. It may also include breakdown in a hydraulic sensor, communication line and the like which are used only for control but can be substituted by other parts.

The method may be modified such that if it is determined that the four-wheel by-wire control cannot be continued at step S12 and even if the process proceeds to three-wheel by-wire control mode, diagonal two-wheel by-wire control mode, front or rear two-wheel by-wire control mode or left and right wheel same-pressure control mode, the process may proceed to step S13, although not shown in Fig. 4 of the embodiment.

At step S13, judgment is made, based on the failed state detected by the failure detecting means, as to whether the pump motor M1 cannot be driven. If it is determined that the pump motor M1 can be driven, the process enters the by-wire control mode in which the pump motor M1 is driven when pressure is increased at step S21, which is the same as that for normal operation. Only when it is judged that the pump motor M1 cannot be driven, the process enters the by-wire control mode at step S22 in which the pump motor M2 is driven when pressure is increased.

The respective control modes in Fig. 4 will be described with reference to Fig. 3.

The by-wire control mode at step S21 in which the pump motor M1 is driven when pressure is increased is the same as the mode in which pressure is increased at the time of normal operation.

In the by-wire control mode at step S22 in which the pump motor M2 is driven when pressure is increased, the control of each valve is also the same as the mode in which pressure is increased at the time of normal operation, however, the first motor M1 is prohibited from being driven, and the second pump P2 is driven by the second motor M2 to increase the pressure.

In the mechanical backup brake mode at step S23, the shutoff valves 21a and 21b are opened and the invalves 23a, 23b, 24a and 24b are closed.
Accordingly, the pressure of the master cylinder is not supplied to the wheel cylinders 18c and 18d of the wheels RR and RL. On the other hand, as the outvalves 25a and 25b of the wheels FL and FR are normally closed, they are closed during mechanical backup brake cause the master cylinder to act on the wheel cylinders 18a and 18b of the wheels FL and FR. Thus, the master cylinder pressure increased by driver depressing the brake pedal acts on the wheel cylinders 18a and 18b of the wheels FL and FR to secure the mechanical backup brake. Incidentally, although the mechanical backup brake may act on the wheels RR and RL, increasing the pressure of the wheel cylinders of the wheels RR and RL as well as the wheels FL and FR by driver depressing the brake pedal burdens the driver with a large depressing load, and is unpractical. In the present embodiment, therefore, the mechanical backup brake is applied only to the wheels FL and FR which are larger in brake force. For this reason, the outvalves 26a and 26b of the wheels RR and RL are set to be normally opened, and the residual pressure in the wheel cylinders of the wheels RR and RL is immediately exhausted at the time of a system failure so as to prevent the wheels RR and RL from being locked.

The by-wire controls are performed as described above, and therefore the second pump P2 is for emergency situations, which is not used when pressure is increased in a normal brake-by-wire control mode. Although the first regular pump P1 is required to be quiet while being driven, the second pump P2 for use in emergency is not required to suppress noise and vibration while being driven, so that the second pump P2 may have pump characteristics that the pulse of discharge hydraulic pressure is larger than the first regular pump P1. For example, a gear pump is used as the first regular pump P1 and a plunger pump generally regarded larger in the pulse of discharge hydraulic pressure than the gear pump may be used as the second pump P2 for emergency.

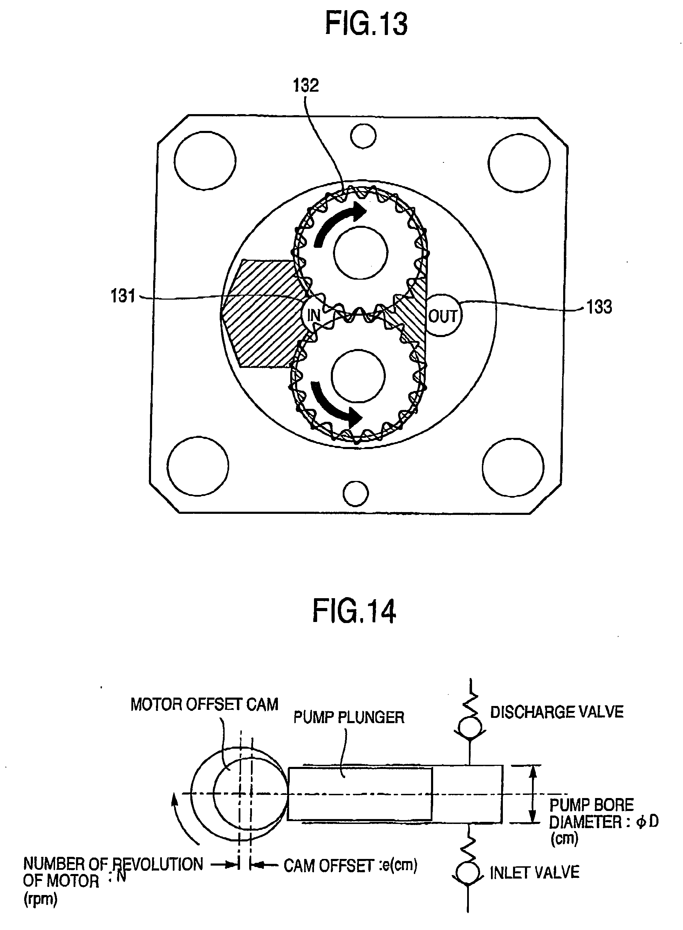

Fig. 13 shows an example of the gear pump. When gear teeth are disengaged by the rotation of gears, fluid is sucked in tooth spaces at a sucking port 131. The fluid which is filled in the tooth spaces is enclosed by a gear case 132 and side plates and transported to a discharge port 133 along the gear case 132 by the rotation of the gears. The teeth engage with each other at the discharge port 133 and the fluid in the tooth spaces is pushed out. As described above, the teeth engagement discharges brake fluid, so that the number of pluses per one rotation of the motor is determined by the tooth number of the gears and the frequency of pulses is determined according to the rotation speed of the motor. Further, the brake fluid is discharged at every tooth space of the gears, and a discharging flow rate at one time is small. That is, the pulse amplitude of the brake fluid is small and the fluid is smoothly discharged.

Fig. 14 shows an example of the plunger pump. The plunger pump transports liquid by the reciprocating motion of a plunger. The mechanism thereof is such that a cam bearing is offset by "e" with respect to the center of rotation of a motor to provide the plunger with a 2 × "e" stroke with respect to motor rotation.

The operation principle is such that when a motor offset cam moves from a piston side to the opposite side, fluid is sucked from an inlet valve. On the other hand, when the motor offset cam moves from the opposite side of the piston to the piston side, the fluid is discharged from a discharge valve. Thus, the piston reciprocates once per one rotation of the motor to discharge brake liquid, and therefore the rotation speed of the motor is equal to the frequency of pulse. In addition, as the brake liquid is discharged by reciprocation of the piston, a discharge flow rate per one reciprocation is large. That is, a pulse amplitude is increased. A theoretical discharge flow rate is expressed by π × ϕD2 × (1/4) × (2 × e) × N × (1/60) [cc/sec].

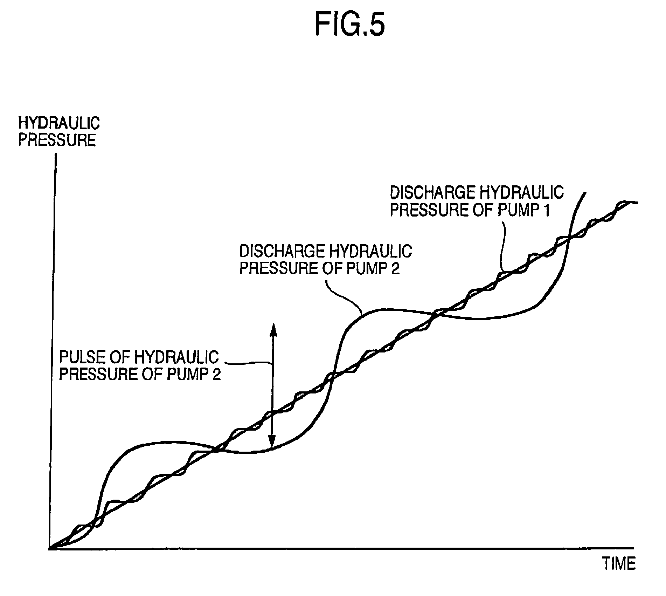

As described above, the pulse frequency of the gear pump is a multiple of the tooth number of the gears in contrast to the pulse frequency of the plunger pump. The discharge flow rate of the gear pump is equal to the volume of the tooth spaces, and therefore, the gear pump has thinner and smoother pulse of discharge hydraulic pressure as compared with the plunger pump. Fig. 5 shows an example of discharge hydraulic pressure of the gear and the plunger pump.

As an example of pulse characteristic of hydraulic pressure which pulses in a certain cycle with respect to the target hydraulic pressure, a pulse amplitude of 0.1 MPa or less is taken here to be small in pulse characteristic and a pulse amplitude of 0.2 MPa or more is taken to be large in pulse characteristic.

### [Example 2]

Another example of the invention will be described. The brake control device of the second example is the same in configuration as that of the first example, and a method of controlling the control modes is also the same, but a method of switching the control modes in the failure determining unit is different.

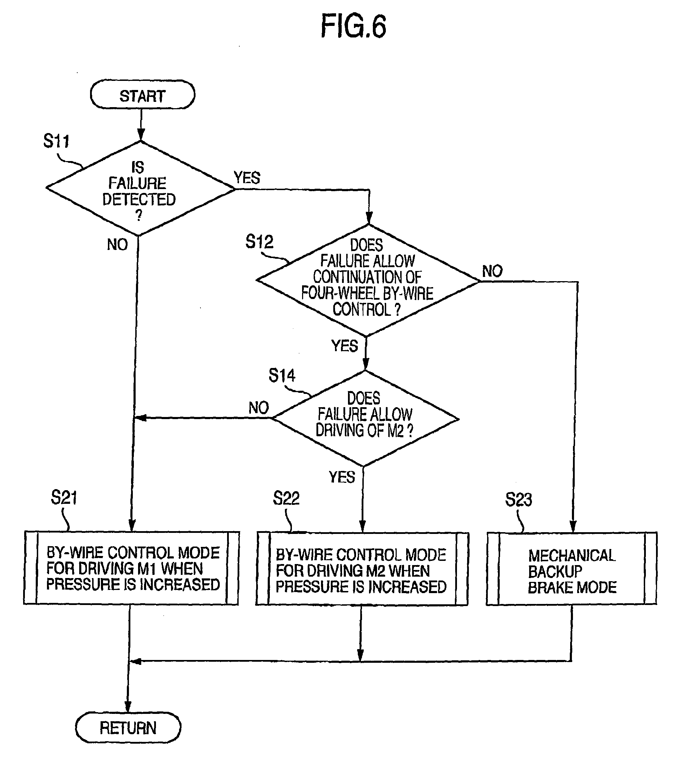

Fig. 6 is a flow chart describing the method of switching the control modes in the failure determining unit in example 2.

At step S11, judgment is made as to whether a failure is detected by failure detecting means. If a failure is not detected, it is regarded as normal, and the process enters the by-wire control mode at step S21 in which the pump motor M1 is driven when pressure is increased. If a failure is detected, the process proceeds to step S12.

At step S12, judgment is made based on the failed state detected by the failure detecting means whether the by-wire control can be continued. If it is determined that the by-wire control cannot be continued, the process proceeds to the mechanical backup brake mode at step S23. If it is determined that the by-wire control can be continued, the process proceeds to step S14.

At step S14, judgment is made based on the failed state detected by the failure detecting means whether the pump motor M2 can be driven. If it is determined that the pump motor M2 can be driven, the process enters the by-wire control mode at step S22 in which the pump motor M2 is driven when pressure is increased. If it is determined that the pump motor M2 cannot be driven, the process enters the by-wire control mode at step S21 in which the pump motor M1 is driven when pressure is increased, which is the same as that at the time of normal operation.

As described above, in the case where a failure occurs in the hydraulic pressure controlling device, not only in failed state in which the pump motor M1 cannot be driven, but also in all failed states in which the pump motor M2 can be driven, a mode is switched into the by-wire control mode in which the pump motor M2 is driven when pressure is increased to enable inhibiting decrease in brake force and causing a driver to recognize abnormality of the brake control device and not to leave the abnormality by emphasizing an alarm to the driver.

### [Example 3]

Further another example of the invention will be described. The brake control device of the third example is the same in configuration as those of the first and the second example, and a method of controlling the control modes is also the same, but a method of switching the control modes in the failure determining unit is different.

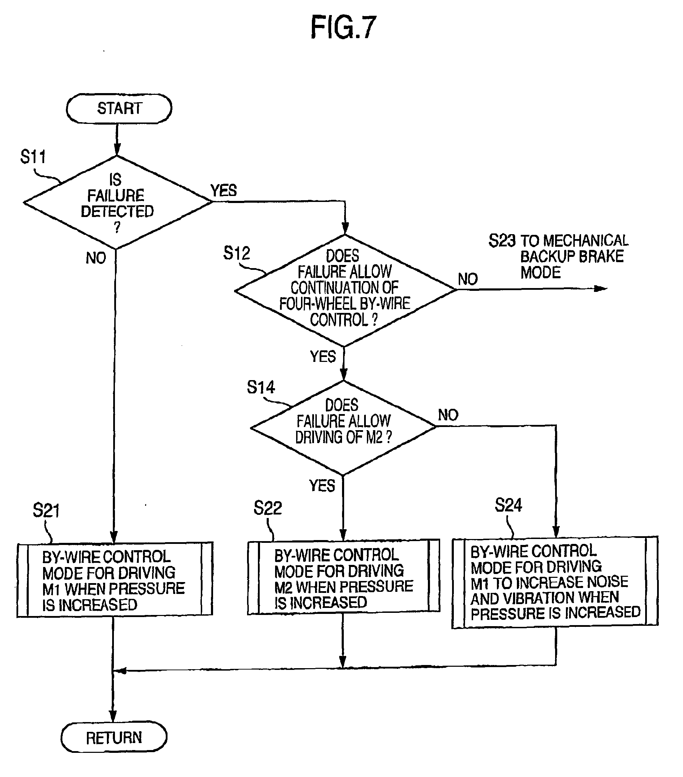

Fig. 7 is a flow chart describing an example of the method of switching the control modes in the failure determining unit in example 3.

At step S11, judgment is made as to whether a failure is detected by failure detecting means. If a failure is not detected, it is regarded as normal, and the process enters the by-wire control mode at step S21 in which the pump motor M1 is driven when pressure is increased. If a failure is detected, the process proceeds to step S12.

At step S12, judgment is made based on the failed state detected by the failure detecting means whether the by-wire control can be continued. If it is determined that the by-wire control cannot be continued, the process proceeds to the mechanical backup brake mode at step S23. If it is determined that the by-wire control can be continued, the process proceeds to step S14.

At step S14, judgment is made based on the failed state detected by the failure detecting means whether the pump motor M2 can be driven. If it is determined that the pump motor M2 can be driven, the process enters the by-wire control mode at step S22 in which the pump motor M2 is driven when pressure is increased.

If it is determined that the pump motor M2 cannot be driven, the process enters the by-wire control mode in which the pump motor M1 is driven when pressure is increased to further increase noise and vibration as compared with noise and vibration at the time of normal operation. As a method of driving the pump motor M1 so that noise and vibration are further increased as compared with noise and vibration at the time of normal operation, the target hydraulic pressure is made to pulse around the center of the target hydraulic pressure at the time of normal operation as is the case with the discharge hydraulic pressure of the plunger pump in Fig. 5. There is another method in which a sine wave is superposed on the target value of the motor driving current to cause the target hydraulic pressure to pulse around the center of the target value at the time of normal operation. This method of superposing a waveform is generally well-known, so that the description thereof is omitted.

As described above, in the case where a failure occurs in the hydraulic pressure controlling device, not only in failed state in which the pump motor M1 cannot be driven, but also in all failed states in which the pump motor M2 can be driven, a mode is switched into the by-wire control mode in which the pump motor M2 is driven when pressure is increased, in addition, also in failed state in which the pump motor M2 cannot be driven, a mode is switched into the by-wire control mode in which the pump motor M1 is driven when pressure is increased to further increase noise and vibration as compared to noise and vibration at the time of normal operation. This enables inhibiting decrease in brake force and causing a driver to recognize abnormality of the brake control device. Emphasizing an alarm to the driver allows lessening the fear that the driver is not aware of the failure of the brake control device and the driver neglects the failure if he is aware of it.

The first to the third examples have been described above. In each case, if a failure in the brake device is detected by the failure detecting means, the pulse of discharge hydraulic pressure in the pump can be larger than that at the time of normal operation. Increasing the pulse of discharge hydraulic pressure in the pump as compared with that at the time of normal operation increases noise and vibration during the brake control, thereby enabling inhibiting decrease in brake force and causing the driver to recognize abnormality of the brake control device, and emphasizing an alarm to the driver causes the driver not to leave the abnormality.

### [Example 4]

Still another example of the invention will be described. The brake control device of the fourth example is almost the same in configuration as that of example 1, but the configuration of a hydraulic pressure source and control modes in the failure determining unit are different.

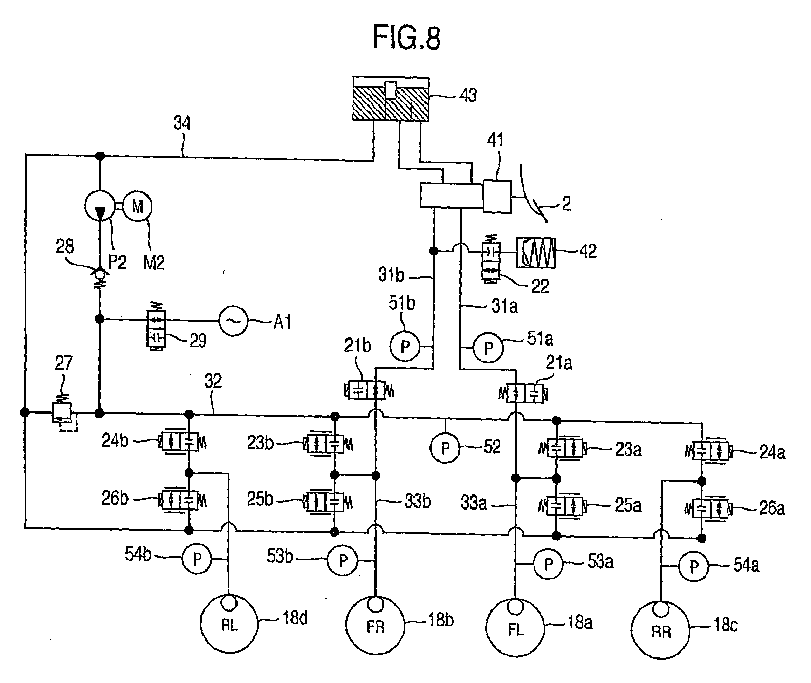

Fig. 8 shows a hydraulic circuit diagram of the brake control device of example 4.

A master cylinder 41 is of a so-called tandem type, and can separately supply the same hydraulic pressure to a P system through an oil path 31a and an S system through an oil path 31b respectively. A reservoir 43 for storing brake liquid is connected to the master cylinder 41.

Wheel cylinders 18a and 18b of the wheels FL and FR are connected to the P and the S system of the oil paths 31a and 31b respectively. Shutoff valves 21a and 21b are provided between the oil path 31a and the wheel cylinder 18a of the wheel FL and between the oil path 31b and the wheel cylinder 18b of the wheel FR respectively. The shutoff valves 21a and 21b are normally opened solenoid valves and perform communication/shutoff between the master cylinder 41 and the wheel cylinders of the wheels FL and FR. With this circuit configuration, at the time of the by-wire control, the shutoff valves 21a and 21b are energized and a side of the master cylinder 41 and a side of the wheel cylinders 18a and 18b of the wheels FL and FR can be separated. Even if a failure occurs due to which the by-wire control is unable, the shutoff valves 21a and 21b are de-energized to enable supplying the hydraulic pressure of the master cylinder to the wheel cylinders 18a and 18b of the wheels FL and FR.

A stroke simulator 42 is connected to the oil path 31b between the master cylinder 41 and the shutoff valve 21b. The stroke simulator 42 secures the stroke of the brake pedal 2 at the time of the by-wire control and produces a brake pedal feeling of a driver. A switching valve 22 is provided on the oil path 31b between the master cylinder 41 and the shutoff valve 21b. The switching valve 22 is a normally closed solenoid valve. De-energizing the solenoid valve at the time of transition to the mechanical backup brake prevents the hydraulic pressure of the oil path 31b from being supplied to the stroke simulator 42.

A switching valve 29 is provided between an accumulator A1 and the discharge side of the pump P2. The switching valve 29 is a normally opened solenoid valve. Energizing the switching valve 29 allows the accumulator to be separated from the oil path on the discharge side of the pump. The discharge side of the pump P2 is connected to the wheel cylinders 18a, 18b, 18c and 18d of the wheels FL, FR, RR and RL through an oil path 32. Invalves 23a, 23b, 24a and 24b are provided between the oil path 32 and the wheel cylinders 18a, 18b, 18c and 18d of the wheels FL, FR, RR and RL respectively.

The invalves 23a, 23b, 24a and 24b are normally closed proportional valves and proportionally control the discharge hydraulic pressure of the accumulator A1 or pump P2 to separately control the hydraulic pressure of the wheel cylinders 18a, 18b, 18c and 18d of the wheels FL, FR, RR and RL. The normally closed invalves prevent the discharge hydraulic pressure of the accumulator A1 or pump P2 from flowing out to the wheel cylinders 18a, 18b, 18c and 18d.

The suction side of the pump P2 is connected to the reservoir 43 through an oil path 34. Outvalves 25a, 25b, 26a and 26b are provided between the oil path 34 and the wheel cylinders 18a, 18b, 18c and 18d of the wheels FL, FR, RR and RL respectively.

The outvalves 25a and 25b are normally closed proportional valves, however, the outvalves 26a and 26b are normally opened proportional valves.

A relief valve 27 is provided between the oil paths 32 and 34 and opens when the discharge hydraulic pressure of the accumulator A1 or pump P2 exceeds a predetermined value to return the hydraulic pressure of the oil path 32 to the reservoir 43.

Wheel cylinder pressure sensors 53a, 53b, 54a and 54b are provided so that they monitor the hydraulic pressure of the P system supplied through an oil path 31a and the S system supplied through an oil path 31b by the master cylinder 41, the master cylinder pressure sensors 51a and 52b monitor the discharge hydraulic pressure of the accumulator A1 or pump P2 respectively and the hydraulic pressure of the oil path 32 and a pump discharge hydraulic pressure sensor 52 monitors the hydraulic pressure of the wheel cylinders 18a, 18b, 18c and 18d of the wheels FL, FR, RR and RL.

Brake-by-wire control will be described below.

At the time of the brake-by-wire control, the shutoff valves 21a and 21b are closed to shut off between the master cylinder 41 and the wheel cylinders 18a and 18b of the wheels FL and FR.

When pressure is increased at the time of the brake-by-wire control, the outvalves 25a, 25b, 26a and 26b are closed. Openings of the invalves 23a, 23b, 24a and 24b are controlled with the accumulator A1 as a hydraulic pressure source, thereby the brake liquid accumulated in the accumulator A1 is adjusted by the invalves 23a, 23b, 24a and 24b through the oil path 32 and is introduced to the wheel cylinders 18a, 18b, 18c and 18d of the wheels FL, FR, RR and RL through the oil path 32, and the pressure is increased.

When pressure is reduced, the invalves 23a, 23b, 24a and 24b are closed and the outvalves 25a, 25b, 26a and 26b are opened to exhaust hydraulic oil in the wheel cylinders 18a, 18b, 18c and 18d of the wheels FL, FR, RR and RL into the reservoir 43 to reduce the pressure.

When pressure is held, all of the invalves 23a, 23b, 24a and 24b and the outvalves 25a, 25b, 26a and 26b are closed to hold the wheel cylinder pressure.

The brake-by-wire control at the time of normal operation has been described above. Description will be then made on how to control when the failure detecting unit in Fig. 2 detects a failure.

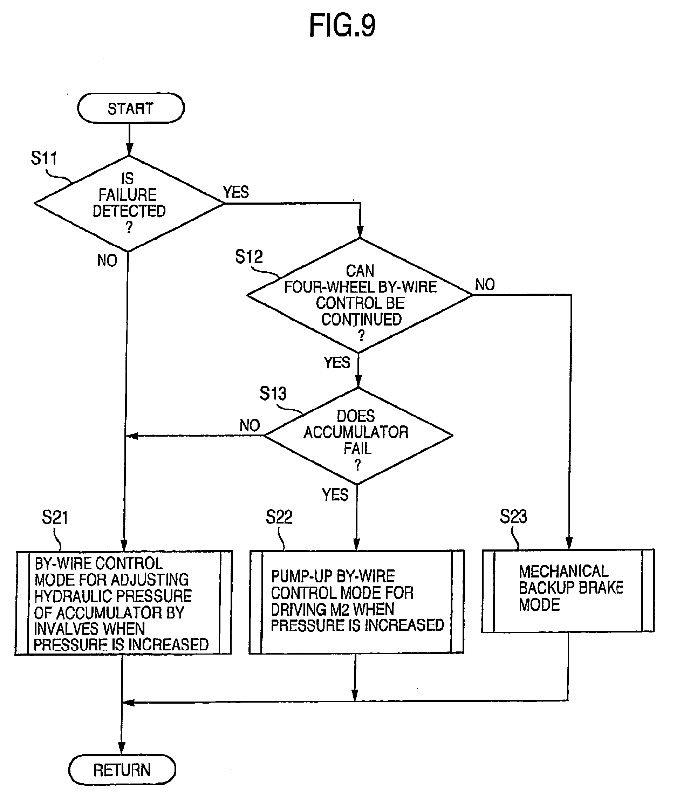

Fig. 9 shows an example of the method of switching the control modes in the failure determining unit in the example in Fig. 8.

At step S11, judgment is made as to whether a failure is detected by failure detecting means. If a failure is not detected, it is considered normal, the process enters the by-wire control mode at step S21 in which the hydraulic pressure of the accumulator is adjusted by the invalves when pressure is increased. If a failure is detected, the process proceeds to step S12.

At step S12, judgment is made based on the failed state detected by the failure detecting means whether four-wheel by-wire control can be continued. If it is determined that the four-wheel by-wire control cannot be continued, the process proceeds to the mechanical backup brake mode at step S23. Fig. 9 illustrates only one example of the method of switching the control modes and parts unrelated to the invention are omitted. Even if it is determined that the four-wheel by-wire control cannot be continued, the process may proceed to three-wheel by-wire control mode, diagonal two-wheel by-wire control mode, or left and right wheel same-pressure control mode according to a failed state instead of immediately proceeding to the mechanical backup brake mode. If it is determined that the four-wheel by-wire control can be continued, the process proceeds to step S13. A failed state in which the four-wheel by-wire control can be continued includes breakdown in a voltage detecting unit or current detecting unit and monitor IC which are used only for detecting a failure. It may also include breakdown in a hydraulic sensor and communication line which are used only for control but can be substituted by other parts.

At step S13, judgment is made based on failed state detected by the failure detecting means whether the accumulator A1 is normally operated.

If it is determined that the accumulator A1 is normally operated, the process enters the by-wire control mode at step S21 which is the same as that at the time of normal operation. Only when it is determined that the accumulator A1 fails, the process enters the pump-up by-wire control mode at step S22 in which the switching valve 29 is closed and the invalves 23a, 23b, 24a and 24b are opened to drive the pump P2 when pressure is increased, thereby directly increasing the pressure of the wheel cylinder.

The control modes in steps S21 to S23 in Fig. 9 will be described with reference to Fig. 8.

The by-wire control mode at step S21 in which the hydraulic pressure of the accumulator is adjusted by the invalves when pressure is increased is the same as a pressure-increase control method in which the invalves 23a, 23b, 24a and 24b are controlled to adjust the hydraulic pressure of the wheel cylinders at the time of normal operation mode with the accumulator A1 as a hydraulic pressure source.

The pump-up by-wire control mode in which the motor M2 is driven when pressure is increased at step S22 is a pump-up pressure-increase control method in which the switching valve 29 is closed, the accumulator A1 used as the hydraulic pressure source is shut off, the invalves 23a, 23b, 24a and 24b are opened, and the pump P2 is driven to directly increase the pressure of the wheel cylinders.

In the mechanical backup brake mode at step S23, the shutoff valves 21a and 21b are opened and the invalves 23a, 23b, 24a and 24b are closed.
Accordingly, the pressure of the master cylinder is not supplied to the wheel cylinders 18c and 18d of the wheels RR and RL. On the other hand, as the outvalves 25a and 25b of the wheels FL and FR are normally closed, they are closed to cause the master cylinder to act on the wheel cylinders 18a and 18b of the wheels FL and FR at the time of the mechanical backup brake. Thus, the master cylinder pressure increased by depression of the brake by the driver pedal acts on the wheel cylinders 18a and 18b of the wheels FL and FR to secure the mechanical backup brake. Incidentally, although the master cylinder pressure may be acted on the wheels RR and RL, when increasing the pressure of the wheel cylinder of the wheel RR and RL as well as the wheels FL and FR by depression of the brake pedal by a driver, this burdens the driver with a large depressing load and is not practical. Accordingly, in the present example, the mechanical backup brake is applied only to the wheels FL and FR which are larger in brake force. For this reason, the outvalves 26a and 26b of the wheels RR and RL are caused to be normally opened, and the residual pressure in the wheel cylinders of the wheels RR and RL is immediately exhausted at the time of a system failure to prevent the wheels RR and RL from being locked.

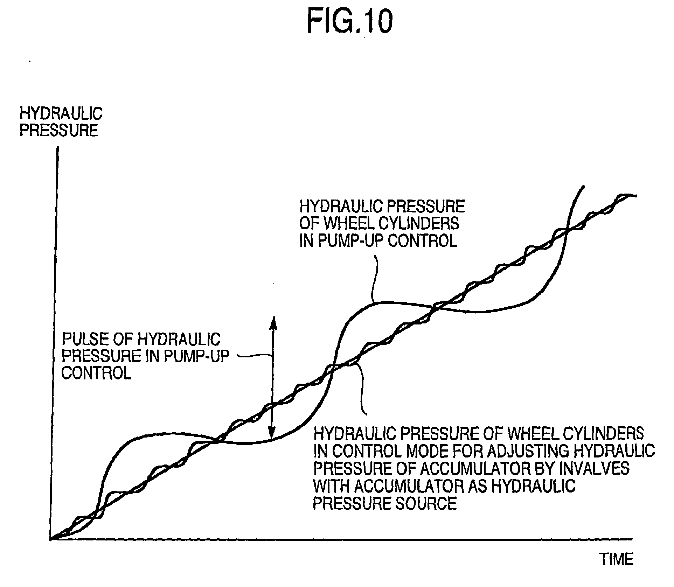

The by-wire controls are performed as described above, and therefore the second pump P2 is for emergency situations, which is not used when pressure is increased in the normal brake-by-wire control mode. The second pump P2 for emergency is not required to suppress noise and vibration while being driven, and the second pump P2 may be a pump having pump characteristics of large pulse of discharge hydraulic pressure. For example, a plunger pump, which is generally regarded as being larger in pulse of discharge hydraulic pressure, may be used. Fig. 10 shows an example of the case where the invalves 23a, 23b, 24a and 24b are controlled to increase the pressure of the wheel cylinder with the accumulator A1 as the hydraulic pressure source and the pressure of the wheel cylinder is increased by pumping up by the plunger pump.

### [Example 5]

Another example of the invention will be described. The brake control device of example 5 is the same in configuration as that of example 4, and a method of controlling the control modes is also the same, but a method of switching the control modes in the failure determining unit is different.

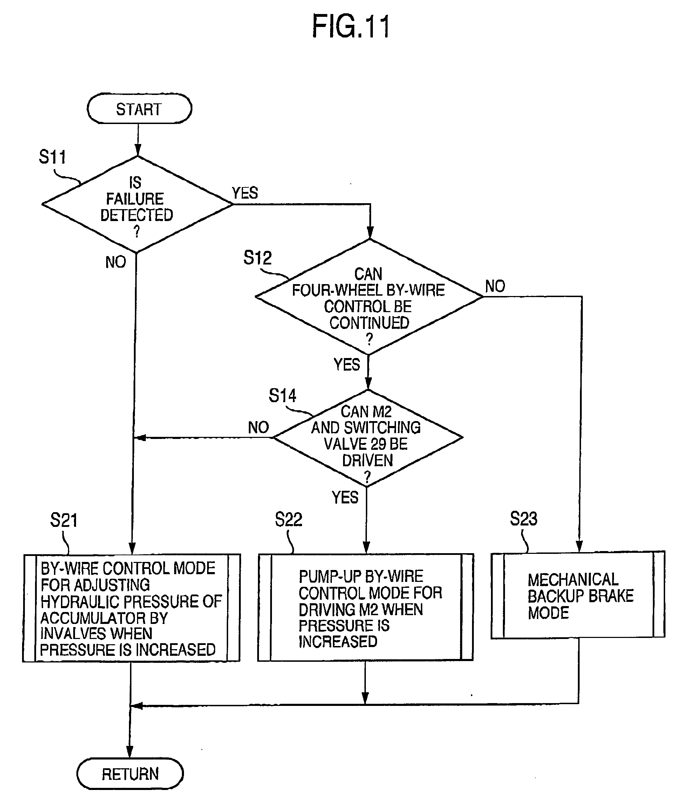

Fig. 11 shows a flow chart describing an example of the method of switching the control modes in the failure determining unit in example 5.

At step S11, judgment is made as to whether a failure is detected by failure detecting means. If a failure is not detected, it is regarded as normal, and the process enters the by-wire control mode at step S21 in which the hydraulic pressure of the accumulator is adjusted by the invalves when pressure is increased. If a failure is detected, the process proceeds to step S12.

At step S12, judgment is made based on the failed state detected by the failure detecting means whether the by-wire control can be continued. If it is determined that the by-wire control cannot be continued, the process proceeds to the mechanical backup brake mode at step S23. If it is determined that the by-wire control can be continued, the process proceeds to step S14.

At step S14, judgment is made based on the failed state detected by the failure detecting means whether the pump motor M2 and the switching valve 29 can be driven. If it is determined that the pump motor M2 and the switching valve 29 can be driven, the process enters the pump-up by-wire control mode at step S22 in which the motor M2 is driven when pressure is increased. If it is determined that the pump motor M2 and the switching valve 29 cannot be driven, the process enters the by-wire control mode at step S21 which is the same as that at the time of normal operation.

The control modes in steps S21 to S23 are the same as those in example 4.

As described above, in the case where a failure occurs in the hydraulic pressure controlling device, not only in failed state in which the accumulator is broken down, but also in all failed states in which the pump motor M2 and switching valve 29 can be driven, a mode is switched into the pump-up by-wire control mode when pressure is increased to enable inhibiting decrease in brake force, causing a driver to recognize abnormality of the brake control device and emphasizing an alarm to the driver causes the driver not to leave the abnormality.

### [Example 6]

Another example of the invention will be described. The brake control device of the sixth example is the same in configuration as that of examples 4 and 5 and a method of controlling the control modes is also the same, but a method of switching the control modes in the failure determining unit is different.

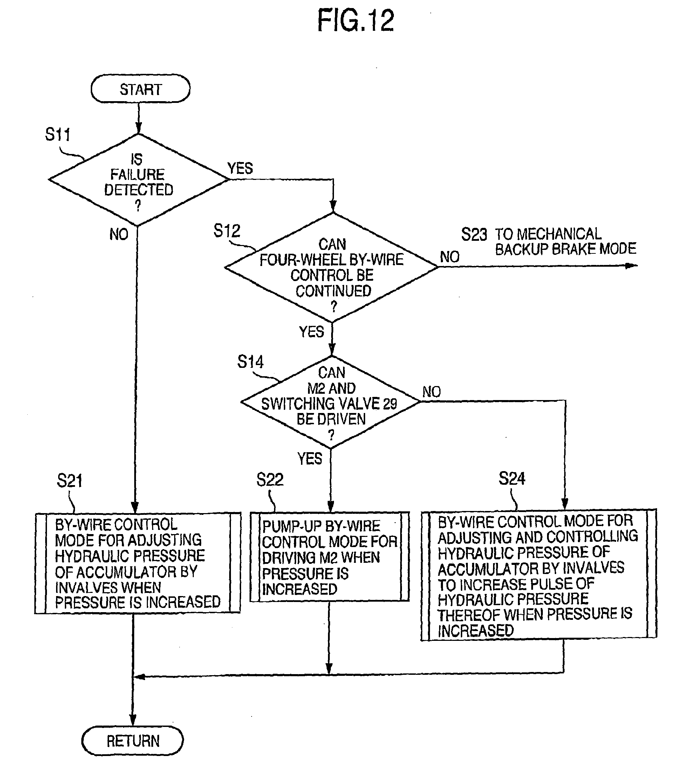

Fig. 12 shows a flow chart describing an example of the method of switching the control modes in the failure determining unit in example 6.

At step S11, judgment is made as to whether a failure is detected by failure detecting means. If a failure is not detected, it is regarded as normal, and the process enters the by-wire control mode at step S21 in which the hydraulic pressure of the accumulator is adjusted by the invalves when pressure is increased. If a failure is detected, the process proceeds to step S12.

At step S12, judgment is made based on the failed state detected by the failure detecting means whether the by-wire control can be continued. If it is determined that the by-wire control cannot be continued, the process proceeds to the mechanical backup brake mode at step S23. If it is determined that the by-wire control can be continued, the process proceeds to step S14.

At step S14, judgment is made based on the failed state detected by the failure detecting means whether the pump motor M2 and the switching valve 29 can be driven. If it is determined that the pump motor M2 and the switching valve 29 can be driven, the process enters the pump-up by-wire control mode at step S22 in which the motor M2 is driven when pressure is increased. If it is determined that the pump motor M2 or the switching valve 29 cannot be driven, the process proceeds to the by-wire control mode at step S24 in which the hydraulic pressure of the accumulator is adjusted and controlled by the invalves so that the pulse of hydraulic pressure thereof is increased when pressure is increased.

As stated above, the process proceeds to the control modes at steps S21 to S24 in accordance with the failed state. The control modes in steps S21 to S23 are the same as those in the fourth and the fifth examples.

Referring to Fig. 8 description will be made on the by-wire control mode at step S24 in which the hydraulic pressure of the accumulator is adjusted and controlled so that the pulse of hydraulic pressure thereof is increased by the invalves i.e., by booster valves when pressure is increased.

As is the case with the by-wire control mode at step S21 in which the hydraulic pressure of the accumulator is adjusted by the invalves when pressure is increased, pressure is increased in such a manner that increase in the wheel cylinder pressure is adjusted by controlling the invalves 23a, 23b, 24a and 24b with the accumulator A1 as the hydraulic pressure source, that is, the invalves 23a, 23b, 24a and 24b are driven so that the pulse of hydraulic pressure becomes larger than that at the time of normal operation. As a method of driving the invalves 23a, 23b, 24a and 24b so that the pulse of hydraulic pressure becomes larger than that at the time of normal operation, there is a method in which the target hydraulic pressure is caused to pulse around its center with a sine wave superposed on the target hydraulic pressure value at the time of normal operation. There is another method in which the target value of driving current of the invalves 23a, 23b, 24a and 24b is caused to pulse around the center of the target value at the time of normal operation.

As described above, in the case where a failure occurs in the hydraulic pressure controlling device, a mode is switched into the pump-up by-wire control mode when pressure is increased, also in failed state in which the pump motor M2 or switching valve 29 cannot be driven, a mode is switched into the by-wire control mode in which the invalves 23a, 23b, 24a and 24 are driven when pressure is increased so that the pulse of hydraulic pressure becomes larger than that at the time of normal operation with the accumulator A1 as a hydraulic pressure source, in addition, in all failed states in which the pump motor M2 and the switching valve 29 can be driven or the pump motor M2 or the switching valve 29 cannot be driven, a driver is caused to recognize abnormality of the brake control device while decrease in brake force is suppressed and an alarm to the driver is emphasized to allow lessening the fear that the driver is not aware of the failure of the brake control device and the driver neglects the failure if he is aware of it.

The examples of the invention have been described above. In each case, if a failure in the brake device is detected by the failure detecting means, the pulse of a discharge hydraulic pressure in the pump or in the wheel cylinder can be increased as compared with that at the time of normal operation. Increasing the pulse of discharge hydraulic pressure in the pump or in the wheel cylinder as compared with that at the time of normal operation increases noise and vibration during the brake control, thereby causing a driver to recognize abnormality of the brake control device while decrease in brake force is suppressed without providing a driver with sense of anxiety and not to leave the abnormality by emphasizing an alarm.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

It should be further understood by those skilled in the art that although the foregoing description has been made on the embodiments of the invention, the invention is not limited thereto and various changes and modifications may be made without departing from the spirit of the invention and the scope of the appended claims.

## Claims

1. A brake control device in which a target value of brake force to be generated at every wheel is determined based upon at least any one of an amount of brake pedal operation by a driver, parameters representing vehicle behavior and communication signals from other control devices and hydraulic actuators are controlled to vary hydraulic pressure of a wheel cylinder (18a, 18b, 18c, 18d) of each wheel so that the brake force reaches the target value, the brake control device comprising:
a failure detection unit detecting a failure in the brake control device; and
a hydraulic pressure control unit controlling the hydraulic actuators so that if a failure is detected by the failure detection unit, pulse of hydraulic pressure in the wheel cylinders (18a, 18b, 18c, 18d) becomes larger than the hydraulic pressure pulse thereof before the failure is detected.

2. A brake control device according to claim 1, wherein
said hydraulic actuators include two pumps different in pulse characteristic from each other, and
said hydraulic pressure control unit switches driving of said two pumps so that if a failure is detected by the failure detection unit the hydraulic pressure pulse in the wheel cylinders (18a, 18b, 18c, 18d) becomes larger than the hydraulic pressure pulse thereof before the failure is detected.

3. A brake control device according to claim 1 or 2, wherein
said hydraulic actuators include booster valves for the wheel cylinders, and
said hydraulic pressure control unit controls said booster valves so that if a failure is detected by the failure detection unit the hydraulic pressure pulse in the wheel cylinders (18a, 18b, 18c, 18d) becomes larger than the hydraulic pressure pulse thereof before the failure is detected.

4. A brake control device according to claim 1, 2 or 3, wherein
said hydraulic actuators include a pump and an accumulator provided on a discharge side of the pump through a solenoid valve, and
said hydraulic pressure control unit opens the solenoid valve to open an oil path (31a, 31b, 32, 34a, 34b) between the discharge side of the pump and the accumulator if a failure is not detected by the failure detection unit and increases the hydraulic pressure of the wheel cylinders (18a, 18b, 18c, 18d) with the accumulator as a hydraulic pressure source, and
said hydraulic pressure control unit closes the solenoid valve to close the oil path (31a, 31b, 32, 34a, 34b) between the discharge side of the pump and the accumulator if a failure is detected by the failure detection unit and increases the hydraulic pressure of the wheel cylinders (18a, 18b, 18c, 18d) with the pump as a hydraulic pressure source.

5. A brake control device according to claim 4, wherein the pump is of a plunger type.

6. A brake control device according to claim 4 or 5, wherein said hydraulic pressure control unit closes the solenoid valve to close the oil path (31a, 31b, 32, 34a, 34b) between the discharge side of the pump and the accumulator and increases the hydraulic pressure of the wheel cylinders (18a, 18b, 18c, 18d) with the pump as a hydraulic pressure source if the accumulator cannot be used in the failed state detected by the failure detection unit.

7. A brake control device according to claim 4, 5 or 6, wherein said hydraulic pressure control unit closes the solenoid valve to close the oil path (31a, 31b, 32, 34a, 34b) between the discharge side of the pump and the accumulator and increases the hydraulic pressure of the wheel cylinders (18a, 18b, 18c, 18d) with the pump as a hydraulic pressure source if the pump and the solenoid valve can be used in the failed state detected by the failure detection unit.

8. A brake control device according to claim 7, wherein said hydraulic actuators further include booster valves for the wheel cylinders (18a, 18b, 18c, 18d), increase the hydraulic pressure of the wheel cylinders (18a, 18b, 18c, 18d) with the accumulator as a hydraulic pressure source and control the booster valves so that the hydraulic pressure pulse in the wheel cylinders (18a, 18b, 18c, 18d) becomes larger than the hydraulic pressure pulse thereof before the failure is detected if the pump and the solenoid valve cannot be used in the failed state detected by the failure detection unit.

9. A brake control device in which a target value of brake force to be generated at every wheel is determined based upon at least any one of an amount of brake pedal operation by a driver, parameters representing vehicle behavior and communication signals from other control devices and hydraulic actuators are controlled to vary hydraulic pressure of a wheel cylinder (18a, 18b, 18c, 18d) of each wheel so that the brake force reaches the target value, said hydraulic actuators comprising two pumps different in pulse characteristic from each other and connected in parallel with each other.

10. A brake control device according to claim 9 further comprising:
a failure detecting unit detecting a failure in the brake control device; and
a hydraulic pressure control unit stopping one of the two pumps, which is larger in pulse of discharge hydraulic pressure, if a failure is not detected by the failure detection unit and driving the one pump of the larger hydraulic pressure pulse if a failure is detected by the failure detection unit.

11. A brake control device according to claim 9 or 10 further comprising:
a failure detection unit detecting a failure in the brake control device; and
a hydraulic pressure control unit driving one of the two pumps, which is larger in pulse of discharge hydraulic pressure, if the other pump of smaller hydraulic pressure pulse cannot be used in the failed state detected by the failure detection unit.

12. A brake control device according to claim 9, 10 or 11 further comprising:
a failure detection unit detecting a failure in the brake control device; and
a hydraulic pressure control unit driving one of the two pumps, which is smaller in pulse of discharge hydraulic pressure, if the other pump of larger hydraulic pressure pulse cannot be used in the failed state detected by the failure detection unit.

13. A brake control device according to claim 9, 10, 11 or 12 further comprising:
a failure detecting unit detecting a failure in the brake control device; and
a hydraulic pressure control unit causing the discharge hydraulic pressure of one of the two pumps, which is smaller in pulse of discharge hydraulic pressure, to pulse so that pulse of hydraulic pressure in the wheel cylinders (18a, 18b, 18c, 18d) becomes larger than the hydraulic pressure pulse thereof before the failure is detected, if the other pump of larger hydraulic pressure pulse cannot be used in the failed state detected by the failure detection unit.

14. A brake control device according to at least one of claims 9 - 13 further comprising a failure detection unit detecting a failure in the brake control device and a hydraulic pressure control unit, wherein
said hydraulic actuators include booster valves for the wheel cylinders (18a, 18b, 18c, 18d), and
said hydraulic pressure control unit controls the booster valves so that pulse of hydraulic pressure in the wheel cylinders (18a, 18b, 18c, 18d) becomes larger than the hydraulic pressure pulse thereof before the failure is detected if one of the two pumps, which is larger in pulse of discharge hydraulic pressure, cannot be used in the failed state detected by the failure detection unit.

15. A brake control device according to at least one of claims 9 - 14, wherein said two pumps comprise a gear pump and a plunger pump.

16. A brake control device according to claim 15 further comprising:
a failure detection unit a failure in the brake control device; and
a hydraulic pressure control unit stopping the plunger pump if a failure is not detected by the failure detection unit and driving the plunger pump if a failure is detected by the failure detection unit.

17. A brake control device according to claim 16, wherein said hydraulic pressure control unit drives the plunger pump if the gear pump cannot be used in the failed state detected by the failure detection unit.

18. A brake control device according to claim 16 or 17, wherein said hydraulic pressure control unit drives the gear pump if the plunger pump cannot be used in the failed state detected by the failure detection unit.

19. A brake control device according to claim 18, wherein said hydraulic pressure control unit causes discharge hydraulic pressure of the gear pump to pulse so that pulse of hydraulic pressure in the wheel cylinders (18a, 18b, 18c, 18d) becomes larger than the hydraulic pressure pulse thereof before the failure is detected if the plunger pump cannot be used in the failed state detected by the failure detection unit.

20. A brake control device according to claim 18 or 19, wherein
said hydraulic actuators include booster valves for the wheel cylinders (18a, 18b, 18c, 18d), and
said hydraulic pressure control unit drives the booster valves so that pulse of hydraulic pressure in the wheel cylinders (18a, 18b, 18c, 18d) becomes larger than the hydraulic pressure pulse thereof before the failure is detected if the plunger pump cannot be used in the failed state detected by the failure detection unit.
